# EUROPÄISCHE PATENTSCHRIFT

(11) **EP 3 839 415 B1**
(45) Veröffentlichungstag und Bekanntmachung des Hinweises auf die Patenterteilung: **08.04.2026**
(21) Anmeldenummer: 19217001.7
(22) Anmeldetag: 17.12.2019
(51) Int. Cl.: G01B 5/008, G05B 19/401, G01B 21/04

(54) **VERFAHREN ZUR PLANUNG VON MESSPFADEN EINES MESSGERÄTES**
METHOD FOR PLANNING MEASUREMENT PATHS OF A MEASURING DEVICE
PROCÉDÉ DE PLANIFICATION DES VOIES DE MESURE D'UN APPAREIL DE MESURE

(43) Veröffentlichungstag der Anmeldung: 23.06.2021
(73) Patentinhaber: Carl Zeiss Industrielle Messtechnik GmbH, 73447 Oberkochen (DE)
(72) Erfinder: Ritter, Markus, 89520 Heidenheim (DE); Hersacher, Steffen, 73430 Aalen (DE); Neumaier, Kilian, 89520 Heidenheim (DE)
(74) Vertreter: Witte, Weller & Partner Patentanwälte mbB

(56) Entgegenhaltungen:
- DE-A1- 102012 024 934
- DE-A1- 102014 225 482
- US-A1- 2015 049 186
- US-A1- 2015 300 798

## Beschreibung

Die vorliegende Erfindung betrifft ein Verfahren und eine Vorrichtung zur Planung von Messpfaden eines Messgerätes. Ferner betrifft die vorliegende Erfindung ein Computerprogrammprodukt, mit Hilfe dessen das erfindungsgemäße Verfahren auf einem Computer ausführbar ist.

Messgeräte, insbesondere Koordinatenmessgeräte mit taktilen und/oder optischen Messsensoren werden in der dimensionellen Messtechnik verwendet, um die Form einer Werkstückoberfläche, bspw. durch Abtastung, zu bestimmen. Da die dimensionelle Messtechnik im Regelfall in Industriezweigen Anwendung findet, in denen sehr hohe Genauigkeiten, beispielsweise für nachfolgende Bearbeitungsschritte oder zur Qualitätssicherung erforderlich sind, ist eine fehlerfreie Messdurchführung notwendig.

Zudem werden Messgeräte, insbesondere Mikroskope (z.B. Raster-Elektronenmikroskope (REM) oder Rasterkraftmikroskope (RKM)) dazu verwendet, bspw. die Oberfläche eines Werkstücks im Zuge der Qualitätskontrolle unter einer starken Vergrößerung anzusehen oder bildlich darzustellen. Die betrachteten Oberflächen weisen dabei Strukturen auf, deren Größenordnung unterhalb eines Auflösungsvermögens eines menschlichen Auges, teilweise sogar auf atomarer Ebene, liegt. Mikroskopische Messgeräte werden bevorzugt in den Bereichen der Biologie, Medizin und den Materialwissenschaften eingesetzt.

Aufgrund der hohen Genauigkeitsanforderungen an die zuvor genannte Messtechnik ist es wünschenswert, einen möglichst automatisierten, gleichbleibenden Messablauf zu gewährleisten, so dass bspw. eine Vielzahl von Messobjekten möglichst schnell und reproduzierbar gemessen werden kann. Bei einem solchen Messablauf wird ein Messkopf des Messgerätes vorzugsweise entlang eines vordefinierten Messpfades bewegt, der vorab durch eine Software-Applikation in Abhängigkeit des zu vermessenden Objektes geplant wurde. Die Erstellung eines solch automatisierten Messablaufs erfordert Kenntnisse über die Funktionsweise von Messgeräten und Erfahrung, wie verschiedene Messobjekte am besten zu vermessen sind.

Beispielsweise bietet die Carl Zeiss Industrielle Messtechnik GmbH unter der Bezeichnung CALYPSO eine Software zur Erstellung solcher Messpfade bzw. Messabläufe und zur Verarbeitung der erhaltenen Messergebnisse an. Die Grundlagen von CALYPSO sind beispielsweise in einer Broschüre mit dem Titel "Einfach Messen und was Sie dazu wissen sollten - Eine Fibel der Messtechnik" (Bestellnummer bei Carl Zeiss: 61212- 2400101) oder in einer Werbebroschüre der Carl Zeiss Industrielle Messtechnik GmbH mit dem Titel "Calypso. Einfach programmieren" (Publikationsnummer 60-11-068) beschrieben.

Die Erstellung des Messablaufs mit CALYPSO erfolgt anhand von sogenannten Prüfmerkmalen. Ein Prüfmerkmal repräsentiert eine dimensionelle Ist-Eigenschaft eines oder mehrerer geometrischer Elemente (sogenannte Messelemente) an einem Messobjekt, wie etwa den Durchmesser einer Bohrung, die Rundheit eines Zylinderabschnitts oder der relative Abstand zwischen zwei geometrischen Elementen. Um ein Prüfmerkmal zu quantifizieren, müssen in der Regel mehrere Messpunkte an einem Messobjekt erfasst und mit dem Messkopf angefahren werden.

Zum Erstellen des Messablaufs legt der Anwender die gewünschten Prüfmerkmale in Form von geometrischen Elementen anhand von CAD-Daten auf einer Benutzeroberfläche an und gibt in diesem Zusammenhang manuell diverse Parameter, einschließlich Parametern für die späteren Maschinenbewegungen, ein. Diese Parametereingabe muss durch einen erfahrenen Anwender geschehen, um den Messablauf bspw. an bestimmte Messbedingungen (z.B. eine Verfahrgeschwindigkeit oder Toleranz) anzupassen. Die Parametereingabe und -anpassung erfordert einen hohen zeitlichen Aufwand, da für jedes geometrische Element stets eine Vielzahl von Parametern manuell einzugeben ist. Zudem erfordert die manuelle Parametereingabe ein hohes Maß an Fachwissen, was zu hohen Kosten für die Erstellung von Messabläufen führt.

Eine weitere Problematik ergibt sich dadurch, dass gewünschte Sollwerte für bestimmte geometrische Eigenschaften der anzulegenden Elemente (z.B. eine jeweilige Größe, Position und/oder Orientierung bzw. Lage) manuell in der 2D- oder 3D-Szene des durch die Messpfadplanungssoftware erzeugten Messplans festgelegt werden müssen. Dieses Festlegen ist mit einem hohen zeitlichen Aufwand verbunden und erfordert ein genaues Arbeiten. Trotz genauem Arbeiten muss der Anwender die geometrischen Eigenschaften zumeist noch durch manuelles Eingeben von Sollwerten in einem Eingabefeld im Nachgang an das Anlegen korrigieren. Hierdurch kommt es zu einem zusätzlichen zeitlichen Aufwand, da der Anwender nicht nur elementbezogene Parameter, sondern auch geometriebezogene Eigenschaften händisch definieren muss.

Die DE 10 2012 024 934 A1 betrifft ein Verfahren zur erstmaligen Erstellung eines Messprogramms für die Messung eines neuen Messobjekts mit einem Messroboter, wobei der Messroboter wenigstens einen berührungslosen Messsensor aufweist und dieser Messsensor mit dem vom Messprogramm gesteuerten Messroboter in verschiedene Positionen relativ zu dem Messobjekt bewegt werden soll. Dabei ist es vorgesehen, dass für das zu erstellende Messprogramm auf ein bereits vorhandenes Messprogramm zurückgegriffen wird, welches für ein bekanntes Messobjekt existiert, das dem neuen Messobjekt möglichst ähnlich ist.

Ein Koordinatenmessgerät, das ein ähnliches Verfahren zur Messpfadplanung ausführt, ist aus der US 2015/0049186 A1 bekannt.

Es ist eine Aufgabe der vorliegenden Erfindung, ein Verfahren und eine Vorrichtung zur Planung von Messpfaden eines Messgerätes derart weiterzuentwickeln, das ein zeitlicher Planungsaufwand und die damit verbundenen Kosten reduziert, eine Komplexität bei der Planung verringert und ein Anwenderkomfort erhöht werden kann.

Die Aufgabe wird durch ein computerimplementiertes Verfahren zur Planung eines Messpfades eines Messgerätes zur Vermessung eines Messobjektes gelöst, bei dem einem Anwender auf einer Benutzeroberfläche eine zweidimensionale oder dreidimensionale virtuelle Ansicht eines Messraumes, in dem das Messobjekt in Form einer zweidimensionalen oder dreidimensionalen technischen Zeichnung angezeigt wird, bereitgestellt wird, an dem der Anwender zum Erstellen des Messpfades mehrere geometrische Elemente als gewünschte Prüfmerkmale definieren kann, wobei das Verfahren folgende Schritte aufweist: Empfangen eines ersten Eingabebefehls zum Anlegen eines erstes Prüfmerkmals der gewünschten Prüfmerkmale, das eine dimensionelle Ist-Eigenschaft eines ersten geometrischen Elements des Messobjektes repräsentiert, zum Erstellen des Messpfades, wobei der Eingabebefehl eine erste Geometrieinformation des anzulegenden ersten geometrischen Elements aufweist und durch Anlegen des ersten geometrischen Elements auf einer Benutzeroberfläche durch den Anwender erzeugt wird; Vergleichen der ersten Geometrieinformation mit einer zweiten Geometrieinformation, die zu einem zweiten geometrischen Element, dem ein vordefinierter erster Parameter zugeordnet ist, gespeichert ist, wobei das erste und das zweite geometrische Element jeweils ein regelgeometrisches Element ist, das eine Gerade, ein Vieleck, ein Kreis, ein Oval, eine Ellipse, eine Ebene, eine Kugel, einen Zylinder, einen Kegel oder einen Torus aufweist, und wobei der vordefinierte erste Parameter einen verwendeten Sensor und/oder Taster, eine Messstrategie, eine Messgeschwindigkeit, eine Messrichtung, eine Sicherheitsebene, eine Antastkraft, eine Normalenrichtung eines Antastpunktes und/oder einen Umfahrweg definiert; Ausgeben eines ersten Zuordnungsvorschlags, den vordefinierten ersten Parameter dem ersten geometrischen Element zuzuordnen, wenn bei dem Vergleich der ersten Geometrieinformation mit der zweiten Geometrieinformation ein vorbestimmtes Ähnlichkeitskriterium erfüllt ist; und Wiederholen der Schritte des Empfangens, des Vergleichens und des Ausgebens für weitere der gewünschten Prüfmerkmale.

Ferner wird die Aufgabe durch ein Messgerät zur Vermessung eines Messobjektes gelöst, wobei einem Anwender auf einer Benutzeroberfläche eine zweidimensionale oder dreidimensionale virtuelle Ansicht eines Messraumes, in dem das Messobjekt in Form einer zweidimensionalen oder dreidimensionalen technischen Zeichnung angezeigt wird, bereitgestellt wird, an dem der Anwender zum Erstellen des Messpfades mehrere geometrische Elemente als gewünschte Prüfmerkmale definieren kann, wobei das Messgerät einen Messsensor und eine Auswerte- und Steuereinheit aufweist, die dazu eingerichtet ist, einen ersten Eingabebefehl zum Anlegen eines erstes Prüfmerkmals der gewünschten Prüfmerkmale, das eine dimensionelle Ist-Eigenschaft eines ersten geometrischen Elements des Messobjektes repräsentiert, zum Erstellen des Messpfades zu empfangen, wobei der Eingabebefehl eine erste Geometrieinformation des anzulegenden ersten geometrischen Elements aufweist und durch Anlegen des ersten geometrischen Elements auf einer Benutzeroberfläche durch den Anwender erzeugt ist; die erste Geometrieinformation mit einer zweiten Geometrieinformation, die zu einem zweiten geometrischen Element, dem ein vordefinierter erster Parameter zugeordnet ist, gespeichert ist, zu vergleichen, wobei das erste und das zweite geometrische Element jeweils ein regelgeometrisches Element ist, das eine Gerade, ein Vieleck, ein Kreis, ein Oval, eine Ellipse, eine Ebene, eine Kugel, einen Zylinder, einen Kegel oder einen Torus aufweist, und wobei der vordefinierte erste Parameter einen verwendeten Sensor und/oder Taster, eine Messstrategie, eine Messgeschwindigkeit, eine Messrichtung, eine Sicherheitsebene, eine Antastkraft, eine Normalenrichtung eines Antastpunktes und/oder einen Umfahrweg definiert; und einen ersten Zuordnungsvorschlag, den vordefinierten ersten Parameter dem ersten geometrischen Element zuzuordnen, auszugeben, wenn bei dem Vergleich der ersten Geometrieinformation mit der zweiten Geometrieinformation ein vorbestimmtes Ähnlichkeitskriterium erfüllt ist; wobei die Auswerte- und Steuereinheit des Weiteren dazu eingerichtet ist, die Schritte des Empfangens, des Vergleichens und des Ausgebens für weitere der gewünschten Prüfmerkmale zu wiederholen.

Ferner wird die Aufgabe durch ein Computerprogrammprodukt mit Programmcode gelöst, der dazu eingerichtet ist, das erfindungsgemäße Verfahren auszuführen, wenn der Programmcode auf einem Computer ausgeführt wird.

Das erfindungsgemäße Verfahren kommt vorzugsweise in einer Software-Applikation (z.B. CALYPSO) zur Messpfadplanung zur Anwendung. Eine direkte Anbindung an ein Messgerät ist nicht erforderlich. Mittels einer solchen Software wird dem Anwender, bspw. auf einer Benutzeroberfläche eines Computerbildschirms, eine zweidimensionale oder dreidimensionale Ansicht (Szene) des Messraumes bereitgestellt. In der virtuellen Messraum-Szene wird dem Anwender ein zu messendes Messobjekt in Form einer zweidimensionalen oder dreidimensionalen technischen Zeichnung (z.B. CAD-Abbildung) angezeigt.

Zum Erstellen eines Messablaufs bzw. eines Messpfades legt der Anwender ein gewünschtes erstes Prüfmerkmal (z.B. erster anzufahrender Messpunkt an dem Messobjekt) in Form des ersten geometrischen Elements, bspw. per Maus, an. Ein Prüfmerkmal repräsentiert eine dimensionelle Ist-Eigenschaft (Geometrieinformation) des anzulegenden, geometrischen ersten Elements an dem Messobjekt. Durch den Messablauf wird vorzugsweise geplant, wie der Messkopf des Messgerätes während einer späteren Messung entlang eines Messpfades oder einer Vielzahl verschiedener Messpfade um das Messobjekt zu bewegen ist, um bspw. eine Geometrie und/oder Oberflächenbeschaffenheit des Messobjektes zu erfassen.

Beim Anlegen und/oder Definieren des ersten geometrischen Elements auf der Benutzeroberfläche wird softwareseitig der erste Eingabebefehl erzeugt, der die erste Geometrieinformation zu dem anzulegenden ersten geometrischen Element aufweist. Die erste Geometrieinformation weist vorzugsweise eine oder mehrere geometrische Eigenschaften des ersten geometrischen Elements auf.

Nach dem Anlegen des ersten geometrischen Elements bzw. nach dem Empfangen des Eingabebefehls wird die erste Geometrieinformation mit einer gespeicherten zweiten Geometrieinformation verglichen. Dem zweiten geometrischen Element ist der erste, vorzugsweise nicht-geometriebezogene Parameter zugeordnet. Die zweite Geometrieinformation und/oder der erste Parameter können bspw. im Zuge eines manuellen Anlegens bzw. Eingebens des zweiten geometrischen Elements durch den Anwender gespeichert worden sein, wobei das zweite geometrische Element zeitlich vor dem ersten geometrischen Element angelegt wurde, d.h. entweder bereits im Prüfplan abgebildet oder zumindest mit diesem verknüpft war.

Beispielsweise ist es möglich, dass die gespeicherte zweite Geometrieinformation in einer Datenbank bereitgestellt ist, die mit dem Prüfplan verknüpft ist. Diese vorteilhafte Datenbank kann eine Vielzahl von geometrischen Elementen umfassen, denen jeweils eine Geometrieinformation und ein Parameter zugeordnet sind.

Bei dem Vergleich der ersten mit der zweiten Geometrieinformation wird eine Ähnlichkeit der erste und der zweiten Geometrieinformation unmittelbar zueinander (absolute Ähnlichkeit) und/oder jeweils in Bezug auf eine weitere Geometrieinformation (relative Ähnlichkeit) untersucht. Ist das vorbestimmte Ähnlichkeitskriterium (je nach Vergleichsart) erfüllt, wird der erste Zuordnungsvorschlag an den Anwender, z.B. in Form eines Pop-Up Fensters, ausgegeben. Somit erhält der Anwender die Möglichkeit, den vordefinierten ersten Parameter dem gerade angelegten, ersten geometrischen Element zuzuordnen, ohne dass er diesen manuell eingeben muss.

Ein Vorteil des erfindungsgemäßen Verfahrens bzw. der erfindungsgemäßen Vorrichtung ist somit, dass ein Anwender durch den ersten Zuordnungsvorschlag eine Unterstützung bei der Definition eines Parameters, der dem ersten geometrischen Element zugeordnet werden soll, erhält, wenn das vorbestimmte Ähnlichkeitskriterium erfüllt ist. Durch diese Unterstützung muss der Anwender im Gegensatz zum Stand der Technik somit nicht notwendigerweise selbst einen Parameter für das erste geometrische Element definieren, sondern erhält hierfür einen Vorschlag. Dies führt zu einem geringeren zeitlichen Planungsaufwand und zu einem erhöhten Komfort für den Anwender, was einen weiteren Vorteil darstellt. Zudem muss der Anwender nicht notwendigerweise ein Experte auf dem Gebiet der Pfadplanung sein, da durch den ersten Zuordnungsvorschlag die Komplexität der Parameterdefinition im Vergleich zu einer rein manuellen Parameterdefinition verringert wird. Der geringere zeitliche Aufwand führt zu geringeren Kosten.

Gemäß einer Ausgestaltung weist das Verfahren ferner den Schritt auf: Zuordnen des vordefinierten ersten Parameters zu dem ersten geometrischen Element bei einer Annahme des ersten Zuordnungsvorschlags seitens des Anwenders.

Ein Vorteil dieser Ausgestaltung ist, dass durch das Annehmen des Zuordnungsvorschlags (z.B. initiiert durch das Klicken eines "OK"-Buttons) verfahrensseitig eine automatische Zuordnung des ersten Parameters zu dem ersten geometrischen Element erfolgt, so dass der Anwender für das erste geometrische Element keinen Parameter von Hand (bspw. über eine Tastatur) eingeben muss. Es ist möglich, dass der Anwender den ersten Zuordnungsvorschlag alternativ ablehnen kann (z.B. initiiert durch das Klicken eines "Abbrechen"-Buttons), was zur Folge hat, dass der erste Zuordnungsvorschlag nicht mehr angezeigt wird. Dies ist vorteilhaft, wenn der Anwender, obwohl das erste und das zweite Element das Ähnlichkeitskriterium erfüllen, bspw. einen speziellen Parameter für das erste geometrische Element definierten möchte, der sich von dem ersten Parameter unterscheiden soll. Hat der Anwender mit anderen Worten Zugriff auf das zweite geometrische Element, das bei erfülltem Ähnlichkeitskriterium als Referenzelement dient, muss der Parameter des ersten geometrischen Elements nicht angepasst werden, um einem gewünschten Soll-Parameter zu entsprechen. Der erste Parameter kann vielmehr direkt von dem zweiten geometrischen Element durch Annehmen des ersten Zuordnungsvorschlags auf das erste geometrische Element übertragen werden.

Gemäß einer weiteren Ausgestaltung weist das Verfahren ferner den Schritt auf: Ausgeben eines ersten Anpassungsvorschlags, zumindest einen Teil der ersten Geometrieinformation an die gespeicherte zweite Geometrieinformation anzupassen, wenn der Vergleich der ersten Geometrieinformation mit der gespeicherten zweiten Geometrieinformation das vorbestimmte Ähnlichkeitskriterium erfüllt.

Ein Vorteil dieser Ausgestaltung ist, dass der Anwender durch den ersten Anpassungsvorschlag eine Unterstützung bei der Anpassung der geometrischen Eigenschaften des ersten geometrischen Elements erhält.

Gemäß dieser Ausgestaltung kann dem Anwender zusätzlich zu dem ersten Zuordnungsvorschlag noch der erste Anpassungsvorschlag ausgegeben (z.B. graphisch angezeigt) werden. Durch diesen wird dem Anwender vorgeschlagen, zumindest einen Teil der zweiten Geometrieinformation des zweiten geometrischen Elements auch für das erste geometrische Element zu übernehmen. Somit dient vorzugsweise zumindest ein Teil der zweiten Geometrieinformation als Referenz für die erste Geometrieinformation.

Der Anpassungsvorschlag kann bspw. auch bereits ausgegeben werden, wenn der Anwender mit dem Anlegen des ersten geometrischen Elements begonnen, dieses jedoch noch nicht abgeschlossen hat. Bspw. kann der Anpassungsvorschlag bereits ausgegeben werden, wenn der Anwender einen ersten Punkt zur Definition einer anzulegenden Geraden definiert hat, und wenn der Vergleich der ersten Geometrieinformation (bspw. ein Geometrietyp des anzulegenden geometrischen Elements (bspw. eine Gerade) und/oder die Koordinaten des ersten Punktes) mit der gespeicherten zweiten Geometrieinformation das vorbestimmte Ähnlichkeitskriterium (z.B. gleicher Geometrietyp und/oder zumindest teilweise gleiche Koordinaten) erfüllt. Dabei kann der Anpassungsvorschlag bspw. derart ausgegeben werden, dass dem Anwender ein zweiter Punkt zur Definition der anzulegenden Geraden ausgegeben/angezeigt wird.

Gemäß einer weiteren Ausgestaltung weist das Verfahren ferner den Schritt auf: Anpassen der ersten Geometrieinformation basierend auf dem ersten Anpassungsvorschlag und Speichern der angepassten ersten Geometrieinformation, wenn der erste Anpassungsvorschlag angenommen wird.

Nach dem Annehmen des ersten Anpassungsvorschlages durch den Anwender erfolgt verfahrensseitig eine vorzugsweise automatische Zuordnung eines Teils der zweiten Geometrieinformation zu dem ersten geometrischen Element, so dass der Anwender für das erste geometrische Element keine händische (bspw. über eine Tastatur) Anpassung der Geometrie des ersten geometrischen Elements vornehmen muss. Hierdurch werden vorzugsweise eine oder mehrere geometrische Eigenschaften des zweiten geometrischen Elements auf das erste geometrische Element übertragen. Beispielsweise ist es möglich, dass eine Abmessung (z.B. Länge, Breite, Höhe und/oder Durchmesser) des zweiten geometrischen Elements, die als zweite Geometrieinformation gespeichert ist, zumindest zum Teil auf das erste geometrische Element übertragen wird, ohne dass der Anwender die Abmessungen manuell eingeben muss, wenn der erste Anpassungsvorschlag durch den Anwender angenommen wird.

Gemäß einer weiteren Ausgestaltung definieren die erste und die zweite Geometrieinformation zumindest eine geometrische Abmessung, einen regelgeometrischen Geometrietyp und/oder eine räumliche Lage des ersten und des zweiten geometrischen Elements.

Die erste und die zweite Geometrieinformation kann somit nicht nur eine, sondern auch eine Vielzahl verschiedener geometrischer Eigenschaften des ersten bzw. zweiten geometrischen Elements aufweisen. Bspw. kann die erste bzw. zweite Geometrieinformation eine Abmessung des ersten bzw. zweiten geometrischen Elements, wie z.B. dessen Länge, Breite, Höhe und/oder dessen Durchmesser aufweisen.

Unter dem Begriff "Geometrietyp" wird vorliegend verstanden, dass die Geometrieinformation bspw. eine Information über die Art und geometrische Beschaffen des geometrischen Elements aufweist, bspw. also ob es sich um ein regelgeometrisches Element handelt, und wenn ja, um welches regelgeometrische Element es sich handelt.

Die räumliche Lage des ersten und/oder zweiten geometrischen Elements ist vorzugsweise in Bezug auf ein Koordinatensystem der zweidimensionalen oder dreidimensionalen, virtuellen Messraum-Szene angegeben. Bspw. kann die räumliche Lage des ersten und/oder zweiten geometrischen Elements in Bezug auf einen Fixpunkt auf der Benutzeroberfläche bspw. in Pixelwerten angegeben sein.

Die erste Geometrieinformation wird beim Anlegen des ersten geometrischen Elements auf Basis der Anwendereingabe erzeugt, wohingegen die zweite Geometrieinformation vorgespeichert ist. Der Anwender kann bspw. vor dem Anlegen des ersten geometrischen Elements, dessen gewünschten Geometrietyp aus einer Mehrzahl verschiedener, bekannter Grundgeometrien auswählen.

Gemäß der Erfindung ist das erste und das zweite geometrische Element jeweils ein regelgeometrisches Element, das eine Gerade, ein Vieleck, ein Kreis, ein Oval, eine Ellipse, eine Ebene, eine Kugel, ein Zylinder, ein Kegel oder ein Torus aufweist.

Diese regelgeometrischen Standardgeometrien stehen dem Anwender vorzugsweise zur Auswahl, wenn das erste geometrische Element angelegt werden soll. Somit kann der Anwender bspw. den geometrischen Grundtyp "Gerade" vor dem Anlegen des ersten geometrischen Elements auswählen. Auf der Benutzeroberfläche kann der Anwender dann, z.B. durch Mausklick eine Gerade zeichnen, d.h. das erste geometrische Element anlegen.

Gemäß der Erfindung definiert der vordefinierte erste Parameter einen verwendeten Sensor und/oder Taster, eine Messstrategie, eine Messgeschwindigkeit, eine Messrichtung, eine Sicherheitsebene, eine Antastkraft, eine Normalenrichtung eines Antastpunktes und/oder einen Umfahrweg. Diese Ausgestaltung gilt in gleicher Weise für den zweiten Parameter.

Durch den ersten Parameter werden vorzugsweise also nicht rein geometriebezogene Eigenschaften zu dem zweiten geometrischen Element angegeben, sondern Eigenschaften, die mit dem späteren Messablauf bei der Ausführung des Messplans auf dem Messgerät in Verbindung stehen.

Gemäß der Erfindung wird der Eingabebefehl durch Anlegen des ersten geometrischen Elements auf einer Benutzeroberfläche durch einen Anwender erzeugt.

Der Eingabebefehl wird also vorzugsweise dadurch erzeugt, dass der Anwender auf der Benutzeroberfläche das erste geometrische Element aus einem vorgegebenen Katalog von Elementen auswählt und anschließend, bspw. durch einen Mausklick, dessen Anlegen auf der Benutzeroberfläche initiiert, wodurch der Eingabebefehl erzeugt wird.

Gemäß einer weiteren Ausgestaltung definiert das Ähnlichkeitskriterium, dass ein Vergleich zwischen der ersten und der zweiten Geometrieinformation mindestens eine vordefinierte Ähnlichkeit aufweisen muss.

In dieser Ausgestaltung werden die erste und zweite Geometrieinformation auf eine absolute Ähnlichkeit zueinander verglichen. Hierbei wird bspw. überprüft, ob zumindest ein vorbestimmter Teil der ersten Geometrieinformation mit der zweiten Geometrieinformation übereinstimmt. D.h. die erste und zweite Geometrieinformation müssen nicht identisch sein, sollten jedoch zumindest so ähnlich zueinander sein, dass auf Basis dieser Ähnlichkeit der erste Zuordnungsvorschlag ausgegeben werden kann.

Gemäß einer weiteren Ausgestaltung ist die vordefinierte Ähnlichkeit erfüllt, wenn das erste und das zweite geometrische Element einen gleichen regelgeometrischen Geometrietyp aufweisen, und wenn eine Abmessung und/oder räumliche Lage des ersten und des zweiten geometrischen Elements um einen vordefinierten Wert voneinander abweicht.

Gemäß dieser Ausgestaltung ist die vordefinierte Ähnlichkeit also erfüllt, wenn es sich bspw. sowohl bei dem ersten als auch bei dem zweiten geometrischen Element um eine Gerade handelt. Falls bspw. das erste geometrische Element ein Kreis, das gespeicherte zweite geometrische Element jedoch eine Gerade ist, kann die vordefinierte Ähnlichkeit nicht erfüllt sein. Handelt es sich bei dem ersten und dem zweiten geometrischen Element um den gleichen Geometrietyp, wird weiterhin geprüft, ob die jeweilige Abmessung (Länge, Breite, Höhe und/oder Durchmesser, etc.) und/oder die jeweilige räumliche Lage um den vordefinierten Wert, bspw. ± 40 %, voneinander abweicht. Ist bspw. eine erste Gerade als beispielhaftes erstes geometrisches Element doppelt so lang wie eine zweite Gerade, die als beispielhaftes zweites geometrisches Element vorgespeichert ist, ist die vordefinierte Ähnlichkeit nicht erfüllt, da die Längenabweichung bspw. mehr als 40 % beträgt.

Gemäß einer weiteren Ausgestaltung weist das Verfahren ferner die Schritte auf: Vergleichen der ersten Geometrieinformation mit einer gespeicherten dritten Geometrieinformation zu einem gespeicherten dritten geometrischen Element, dem ein vordefinierter zweiter Parameter zugeordnet ist, und Ausgeben eines zweiten Zuordnungsvorschlags, den vordefinierten zweiten Parameter dem ersten geometrischen Element zuzuordnen, wenn bei dem Vergleich der ersten Geometrieinformation mit der gespeicherten dritten Geometrieinformation das vorbestimmte Ähnlichkeitskriterium erfüllt ist.

In dieser Ausgestaltung wird die erste Geometrieinformation des ersten geometrischen Elements nicht nur mit der zweiten Geometrieinformation verglichen, sondern zusätzlich auch mit der dritten Geometrieinformation. Stimmen bspw. die erste und die zweite Geometrieinformation nicht überein, da es sich bspw. bei dem erste geometrischen Element um einen Kreis und bei dem zweiten geometrischen Element um eine Gerade handelt, wird die erste Geometrieinformation auch noch mit der dritten Geometrieinformation verglichen. Handelt es sich bei dem dritten geometrischen Element bspw. um einen Kreis, der das vorbestimmte Ähnlichkeitskriterium erfüllt, kann an den Anwender der zweite Zuordnungsvorschlag ausgegeben werden.

Dies hat den Vorteil, dass ein Vergleich nicht nur mit einem geometrischen Element, das vorgespeichert ist, sondern mit mehreren geometrischen Elementen, die vorgespeichert sind, möglich ist. Hierdurch wird die Chance für den Anwender erhöht, einen Zuordnungsvorschlag zu dem angelegten ersten geometrischen Element zu erhalten. Das dritte geometrische Element mit der dritten Geometrieinformation und dem zweiten Parameter kann vorliegend exemplarisch für eine Vielzahl weiterer geometrische Elemente mit zugehörigen Geometrieinformationen und Parameter verstanden werden. So sind bspw. Ausführungen mit mehr als zwei geometrischen Elementen umfasst. Das neu anzulegende, geometrische Element (erstes geometrisches Element) wird dann vorzugsweise mit allen vorab gespeicherten, geometrischen Elementen verglichen.

Gemäß einer weiteren Ausgestaltung definiert das Ähnlichkeitskriterium, ob die erste und die zweite Geometrieinformation ähnlicher als die erste und die dritte Geometrieinformation zueinander sind.

In dieser Ausgestaltung erfolgt ein Vergleich auf relative Ähnlichkeit zwischen der ersten und der zweiten sowie der ersten und der dritten Geometrieinformation. Handelt es sich bspw. bei dem ersten, zweiten und dritten geometrischen Element jeweils um eine Gerade, wird bei diesem relativen Ähnlichkeitsvergleich geprüft, welche der beiden Geraden der ersten Gerade ähnlicher ist.

Gemäß einer weiteren Ausgestaltung weist das Verfahren den Schritt auf: Ausgeben des ersten Zuordnungsvorschlags, wenn die erste und die zweite Geometrieinformation ähnlicher als die erste und die dritte Geometrieinformation zueinander sind, und Ausgeben des zweiten Zuordnungsvorschlags, wenn die erste und die dritte Geometrieinformation ähnlicher als die erste und die zweite Geometrieinformation zueinander sind.

Je nach Ausgang des oben genannten, relativen Ähnlichkeitsvergleichs wird entweder der erste Zuordnungsvorschlag oder der zweite Zuordnungsvorschlag an den Anwender ausgegeben. Dies hat den Vorteil, dass bei einer Mehrzahl gleicher geometrischer Elemente ein Zuordnungsvorschlag zu demjenigen geometrischen Element ausgegeben wird, das die größte Ähnlichkeit zu dem momentan anzulegenden, ersten geometrischen Element hat.

Gemäß einer weiteren Ausgestaltung weist das Verfahren ferner den Schritt auf: Zuordnen des vordefinierten zweiten Parameters zu dem ersten geometrischen Element bei einer Annahme des zweiten Zuordnungsvorschlags seitens eines Anwenders.

Gemäß einer weiteren Ausgestaltung weist das Verfahren ferner den Schritt auf: Ausgeben eines zweiten Anpassungsvorschlags, zumindest einen Teil der ersten Geometrieinformation an die gespeicherte dritte Geometrieinformation anzupassen, wenn der Vergleich der ersten Geometrieinformation mit der gespeicherten dritten Geometrieinformation das vorbestimmte Ähnlichkeitskriterium erfüllt.

Gemäß einer weiteren Ausgestaltung weist das Verfahren ferner den Schritt auf: Anpassen der ersten Geometrieinformation basierend auf dem zweiten Anpassungsvorschlag und Speichern der angepassten ersten Geometrieinformation, wenn der zweite Anpassungsvorschlag angenommen wird.

Es versteht sich, dass sich die Vorteile, Klarstellungen und sonstigen Ausführungen, die bezüglich des zweiten geometrischen Elements, der zweiten Geometrieinformation und/oder des ersten Parameters ausgeführt sind, auch auf das dritte und jedes weitere geometrische Element, die dritte Geometrieinformation und/oder den zweiten Parameter beziehen, ohne explizit erwähnt werden zu müssen.

Es versteht sich zudem, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, da der Schutzumfang der vorliegenden Erfindung durch die anhängigen Patentansprüche festgelegt wird. Zudem versteht es sich, dass sich die Ausgestaltungen des erfindungsgemäßen Verfahrens in äquivalenter Weise auf die erfindungsgemäße Vorrichtung beziehen, ohne explizit in Verbindung mit der erfindungsgemäßen Vorrichtung genannt werden zu müssen.

Ausführungsbeispiele der Erfindung sind in der Zeichnung dargestellt und werden in der nachfolgenden Beschreibung näher erläutert. Es zeigen:
- Fig. 1: ein Messgerät mit einem Ausführungsbeispiel der erfindungsgemäßen Vorrichtung;
- Fig. 2: eine erste schematische Darstellung eines Zuordnungsvorschlags;
- Fig. 3: eine zweite schematische Darstellung eines Anpassungsvorschlags;
- Fig. 4: ein Flussdiagramm eines ersten Ausführungsbeispiels des erfindungsgemäßen Verfahrens;
- Fig. 5: eine erste schematische Darstellung zum Anpassen von geometrischen Eigenschaften eines geometrischen Elements;
- Fig. 6: eine zweite schematische Darstellung zum Anpassen von geometrischen Eigenschaften eines geometrischen Elements; und
- Fig. 7: eine schematische Darstellung einer Übernahme von Parametern.

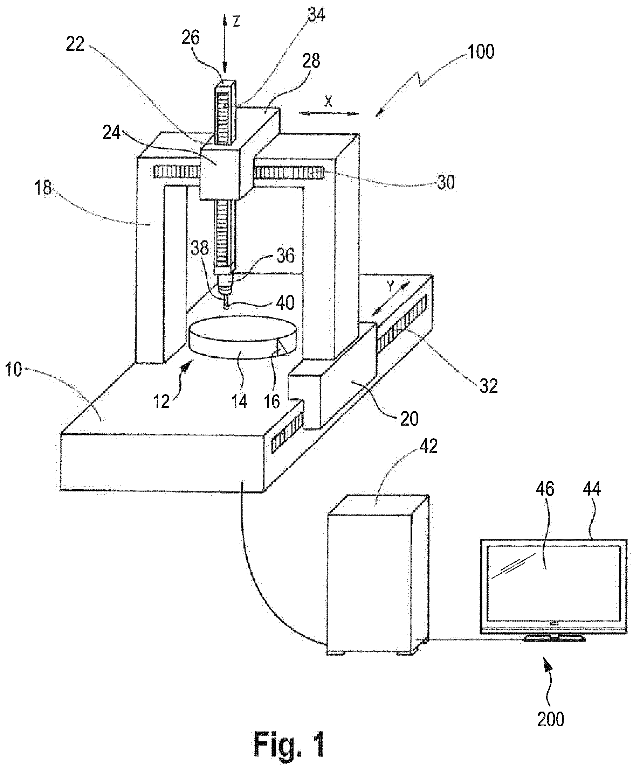

Fig. 1 zeigt ein beispielhaftes Messgerät mit einem Ausführungsbeispiel einer erfindungsgemäßen Vorrichtung, auf der das erfindungsgemäße Verfahren ausführbar ist. Das Messgerät ist in seiner Gesamtheit mit der Bezugsziffer 100 bezeichnet. Die Vorrichtung ist in ihrer Gesamtheit mit der Bezugsziffer 200 gekennzeichnet.

Bei dem Messgerät 100 handelt es sich vorliegend um ein Koordinatenmessgerät in sogenannter Portalbauweise. In anderen Ausführungsbeispielen kann es sich bei dem Messgerät 100 auch um ein Mikroskop, bspw. um ein Rasterelektronenmikroskop oder ein Rasterkraftmikroskop handeln.

Das Koordinatenmessgerät 100 weist eine Basis 10 auf. Bei der Basis 10 handelt es sich vorzugsweise um eine stabile Platte, welche beispielsweise aus Granit gefertigt ist. Auf der Basis 10 ist eine Werkstückaufnahme 12 angeordnet, die dazu ausgebildet ist, ein Messobjekt 14 zu halten bzw. aufzunehmen. Hierzu sind an der Werkstückaufnahme 12 bspw. ein oder mehrere Befestiungselemente 16 (z.B. Zwingen oder (Schraub-) Klemmen) vorgesehen, mittels derer das Messobjekt 14 vorzugsweise lösbar an der Werkstückaufnahme 12 befestigt ist. Das Messobjekt 14 ist bspw. ein Lehrring, wie er bspw. zum Kalibrieren von Koordinatenmessgeräten verwendet wird.

Auf der Basis 10 ist ein Portal 18 in Längsrichtung verschiebbar angeordnet. Das Portal 18 dient als bewegliche Trägerstruktur. Das Portal 18 weist zwei von der Basis 10 nach oben abragende Säulen auf, die durch einen Querträger verbunden sind und gesamthaft eine umgekehrte U-Form aufweisen.

Die Bewegungsrichtung des Portals 18 relativ zu der Basis 10 wird üblicherweise als Y- Richtung bezeichnet und erfolgt über einen ersten motorischen Antrieb 20 (z.B. einen Stellmotor). Der erste Antrieb 20 ist in einem zu der Basis 10 weisenden Endbereich einer der abragenden Säulen angeordnet und dazu eingerichtet, das Portal 18 entlang der Y-Richtung zu verfahren. An dem oberen Querträger des Portals 18 ist ein Schlitten 22 angeordnet, der in Querrichtung über einen zweiten motorischen Antrieb 24 verfahrbar ist. Diese Querrichtung wird üblicherweise als X- Richtung bezeichnet. Der zweite Antrieb 24 ist vorliegend in dem Schlitten 22 verbaut. Der Schlitten 22 trägt eine Pinole 26, die in Z-Richtung, also senkrecht zu der Basis 10, über einen dritten motorischen Antrieb 28 verfahrbar ist. Der dritte Antrieb 28 ist in dem Schlitten 22 integriert. Es sei erwähnt, dass die Antriebe 20, 24, 28 nicht an den genannten Positionen angeordnet sein müssen. Bspw. kann der dritte Antrieb 28 in der Pinole 26 verbaut sein.

Die Bezugsziffern 30, 32, 34 bezeichnen Messeinrichtungen, anhand derer die X-, Y- und Z-Positionen des Portals 18, des Schlittens 22 und der Pinole 26 bestimmt werden können. Typischerweise handelt es sich bei den Messeinrichtungen 30, 32, 34 um Glasmaßstäbe, welche als Messskalen dienen. Diese Messskalen sind in Verbindung mit entsprechenden Leseköpfen (hier nicht dargestellt) dazu ausgebildet, die jeweils aktuelle Position des Portals 18 relativ zu der Basis 10, die Position des Schlittens 22 relativ zu dem oberen Querbalken des Portals 18 und die Position der Pinole 26 relativ zu dem Schlitten 22 zu bestimmen.

An einem unteren, freien Ende der Pinole 26 ist ein Messkopf 36 angeordnet. Der Messkopf 36 ist dazu eingerichtet, Messpunkte an dem Messobjekt 14 zu erfassen. Der Messkopf 36 ist Teil eines Messsensors, dessen Messsensorik von dem Messkopf 36 separat angeordnet oder in diesem integriert und über ein oder mehrere Kabel oder kabellos mit diesem verbunden sein kann. Der Messkopf 36 weist einen in Z-Richtung in Richtung der Basis 10 abragenden, taktilen Taststift 38 auf. Der Taststift 38 ist dazu eingerichtet, mittels eines Tastkopfes 40 eine Oberfläche des Messobjektes 14 abzutasten. Der Tastkopf 40 ist beispielsweise eine Rubinkugel.

Bei der Abtastung der Oberfläche des Messobjektes 14 erzeugt der Tastkopf 40 ein elektrisches Messsignal, auf Basis dessen die dimensionellen Eigenschaften des zu vermessenden Messobjektes 14 ermittelt werden können. Zum Anfahren der Messpunkt an dem Messobjekt 14 wird der Messkopf 36 relativ zu der Werkstückaufnahme 12 bzw. zu dem Messobjekt 14 mittels der Antriebe 20, 24, 28 verfahren. Hierzu erhalten die Antriebe 20, 24, 28 von einer Auswerte- und Steuereinheit 42 Steuerbefehle, auf Basis derer die Antriebe 20, 24, 28 jeweils einzeln oder gesamthaft (bspw. über eine CNC-Ansteuerung) angesteuert werden.

Die Auswerte- und Steuereinheit 42 ist in Fig. 1 beabstandet von dem Koordinatenmessgerät 100 als separate Einheit angeordnet und mit der Basis 10 des Koordinatenmessgerätes 100 über mehrere Kabel verbunden. Eine Verbindung über ein Kabel oder kabellos ist ebenfalls möglich. Zudem ist es möglich, dass die Auswerte- und Steuereinheit 42 in dem Koordinatenmessgerät 100 (z.B. in der Basis 10) integriert ist. Die Auswerte- und Steuereinheit 42 umfasst ferner die Vorrichtung 200, die vorliegend in Form eines Computers 44 dargestellt ist. Der Computer 44 ist separat von der Auswerte-und Steuereinheit 42 angeordnet. Die Steuerbefehle zum Ansteuern der Antriebe 20, 24, 28 werden vorzugsweise von einer Softwareapplikation bereitgestellt, die auf dem Desktop- oder Laptop- Computer 44 ausgeführt wird. Der Computer 44 kann grundsätzlich auch in der Auswerte- und Steuereinheit 42 integriert sein.

Eine beispielhafte Softwareapplikation ist die von der Anmelderin vertriebene Software CALYPSO. CALYPSO ist eine Software zu Planung von Messpfaden und zur Auswertung von Messpunkten, die bevorzugt dazu ausgebildet ist, das erfindungsgemäße Verfahren auszuführen. Mittels CALYPSO erstellt ein Anwender bspw. einen Prüfplan, anhand dessen die Vermessung des Messobjektes 14 erfolgen soll. Zur Erzeugung des Prüfplans definiert der Anwender mehrere Prüfmerkmale in Form von geometrischen Elementen an dem Messobjekt 14. Hierfür wird dem Anwender bspw. auf einer Benutzeroberfläche 46 (z.B. dem Bildschirm) des Computers 44 eine zweidimensionale oder dreidimensionale, virtuelle Ansicht (Szene) eines Messraumes bereitgestellt. In der virtuellen Messraum-Szene wird dem Anwender vorzugsweise das Messobjekt 14 in Form einer zweidimensionalen oder dreidimensionalen technischen Zeichnung (z.B. CAD-Abbildung) angezeigt, an dem er ein oder mehrere geometrische Elemente als Prüfmerkmale definieren kann. Anhand der geometrischen Elemente erstellt CALYPSO die Steuerbefehle, die vorzugsweise über ein oder mehrere Kabel oder kabellos an die Auswerte- und Steuereinheit 42 übermittelt werden.

Es sei darauf hingewiesen, dass in Fig. 1 beispielhaft ein Koordinatenmessgerät 100 in Portalbauweise erläutert ist. Grundsätzlich können auch Koordinatenmessgeräte 100 in Ausleger-, Brücken-, oder Ständerbauweise zum Einsatz kommen. Je nach Bauart des Koordinatenmessgerätes 100 lässt sich die Relativbewegung von der Basis 10 und dem Messkopf 36 entlang einer, zweier oder aller drei Raumrichtungen durch eine Verfahrbarkeit der Basis 10 bzw. der Werkstückaufnahme 12 realisieren. Alternativ kann das Koordinatenmessgerät 100 auch als ein Gelenkarmsystem (bspw. eines Roboter) mit einer Vielzahl von Freiheitsgraden ausgeführt sein. Beispielhaft kann das Koordinatenmessgerät 100 als Bauteil eines Roboters, z.B. als Roboterarm ausgestaltet sein, an dessen Endeffektor (nicht gezeigt) der Messkopf 36 angeordnet ist. Der Begriff "Koordinatenmessgerät" ist dementsprechend breit aufzufassen als jegliche Art von System, das sich zur Erfassung von Koordinaten eines Messobjekts eignet.

Zudem kann in anderen, nicht gezeigten Ausführungsbeispielen der Messkopf 36 auch mehrere taktile und/oder optische Messköpfe aufweisen, die bspw. in unterschiedliche Raumrichtungen abragen können. Grundsätzlich sei erwähnt, dass der Messkopf 36 beabstandet von seiner Messsensorik sein kann, oder dass sowohl der Messkopf als auch die Messsensorik in einem gemeinsamen Gehäuse angeordnet ist. In anderen Ausführungsbeispielen kann die Geometrie des zu vermessenden Messobjektes 14 über eine oder mehrere Kameras, die bspw. an dem freien Ende der Pinole 26 angeordnet sind und von dort aus in verschiedenen Raumrichtungen blicken, optisch ermittelt werden. In Falle, dass es sich bei dem Messgerät 100 um ein Mikroskop handelt, kann der Messkopf bspw. auch ein Optik eines Mikroskops aufweist und dazu eingerichtet sein, die Oberfläche des Messobjektes vielfach zu vergrößern.

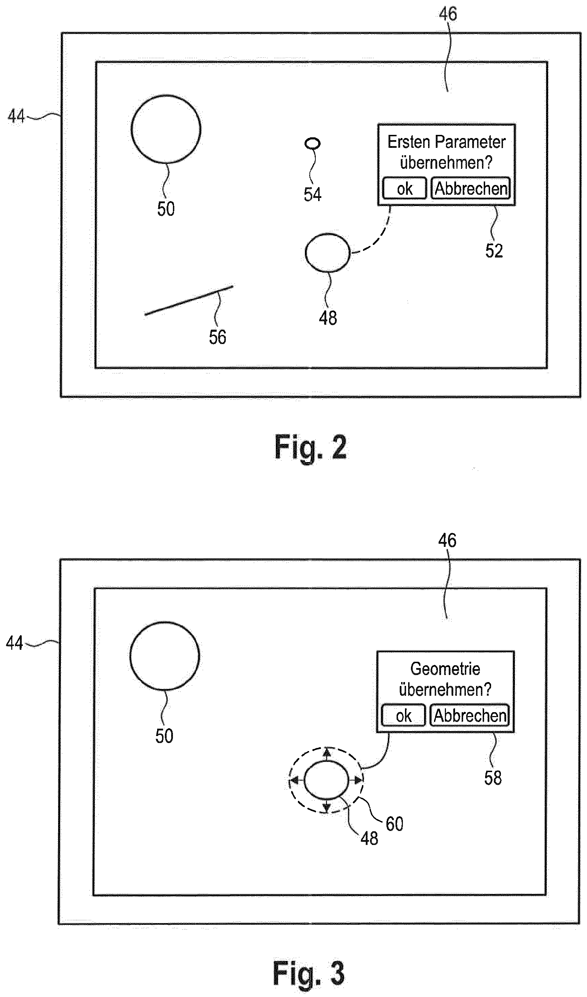

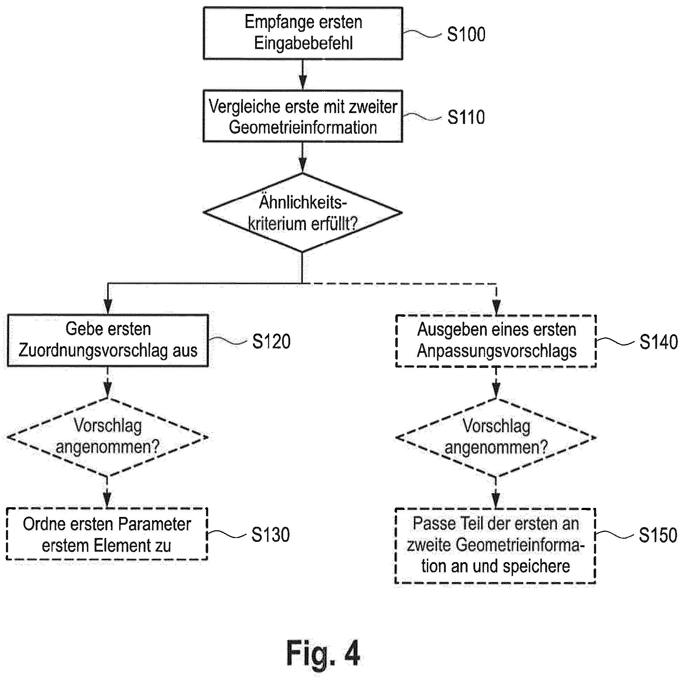

In Fig. 2 und Fig. 3 sind beispielhafte schematische Ansichten der Benutzeroberfläche 46 des Computers 44 dargestellt. Anhand der Figuren 2 und 3 werden das erfindungsgemäße Verfahren sowie vorteilhafte Ausführungen desselben erläutert, wobei zur besseren Orientierung in Fig. 4 ein Verfahrens-Flussdiagramm dargestellt ist.

Auf der Benutzeroberfläche 46 ist in den Figuren 2 und 3 aus Gründen der Übersichtlichkeit kein Messobjekt 14 dargestellt. Es ist eine zweidimensionale Messraum-Szene dargestellt, in der der Anwender vorzugsweise manuell ein erstes geometrisches Element 48 anlegen kann. Dieses Anlegen kann bspw. durch einen oder mehrere Mausklicks erfolgen. Der Anwender kann dabei vorzugsweise aus einer Vielzahl von vorgegebenen, regelgeometrischen Geometrietypen einen gewünschten Geometrietyp (z.B. Gerade, Kreis, Vieleck, Ebene, Zylinder, etc.) auswählen. Die Geometrietypen sind vorzugsweise aus einer Drop-Down-Menüleiste der Benutzeroberfläche 46 wählbar.

Zu dem ersten geometrischen Element 48 ist eine erste Geometrieinformation verfügbar. Durch die erste Geometrieinformation ist beispielhaft definiert, dass es sich bei dem ausgewählten Geometrietyp um einen Kreis mit einem durch den Anwender während des Anlegens definierten Kreisdurchmesser handelt. Softwareseitig wird die erste Geometrieinformation zu dem ersten geometrischen Element 48 als Eingabebefehl (z.B. initiiert durch Klicken der Maus) empfangen (siehe Schritt S100 in Fig. 4).

Auf der Benutzeroberfläche 46 sind neben dem ersten geometrischen Element 48 zudem noch weitere geometrische Elemente, die vorgespeichert sind, dargestellt. Ein zweites geometrisches Element 50 ist beabstandet von dem ersten geometrischen Element in einem oberen linken Eckbereich der Benutzeroberfläche 46 dargestellt. Das gespeicherte zweite geometrische Element 50 weist eine zweite Geometrieinformation auf, durch die bspw. angegeben ist, dass es sich um einen Kreis (als Geometrietyp) mit einem vordefinierten Durchmesser handelt. Zudem ist dem zweiten geometrischen Element 50 ein vordefinierter erster Parameter zugeordnet, bspw. eine Verfahrgeschwindigkeit, die der Messkopf 36 während einer Bewegung entlang eines durch das zweite geometrische Element definierten Messpfades haben soll.

Das gespeicherte zweite geometrische Element 50 wurde beispielsweise von dem Anwender zeitlich vor dem Anlegen des ersten geometrischen Elements 48 in dem Prüfplan angelegt und in diesem Zuge abgespeichert. Hierbei wurde der erste Parameter, bspw. händisch von dem Anwender, zu dem zweiten geometrischen Element 50 definiert. Das zweite geometrische Element 50 ist vorzugsweise in einem Permanent-Datenspeicher (z.B. SSD-Festplatte) des Computers 44 gespeichert, kann jedoch grundsätzlich auch in einem temporären Zwischenspeicher (z.B. Arbeitsspeicher oder RAM-Speicher) gespeichert sein.

Nachdem der Anwender das erste geometrische Element 48 angelegt hat bzw. der erste Eingabebefehl empfangen wurde, erfolgt erfindungsgemäß in Schritt S110 ein Vergleichen der ersten Geometrieinformation mit einer gespeicherten zweiten Geometrieinformation. Wenn dieser Vergleich ein vorbestimmtes Ähnlichkeitskriterium (z.B. gleicher Geometrietyp und Durchmesserabweichung von weniger als 40 %) erfüllt, wird in Schritt S120 ein erster Zuordnungsvorschlag 52 an den Anwender ausgegeben, den vordefinierten ersten Parameter dem ersten geometrischen Element 48 zuzuordnen. Der erste Zuordnungsvorschlag 52 wird dem Anwender vorzugsweise als Pop-Up-Fensters graphisch und/oder textuell dargestellt und bezieht sich vorzugsweise eindeutig erkennbar auf das erste geometrische Element. Der erste Zuordnungsvorschlag 52 kann, bspw. durch Klicken eines "OK" Buttons, angenommen werden, wodurch der vordefinierte erste Parameter in dem optionalen Schritt S130 dem ersten geometrischen Element 48 zugeordnet wird. Grundsätzlich kann der erste Zuordnungsvorschlag auch in akustischer Form oder sonstiger Form angezeigt werden.

In Fig. 2 ist zusätzlich noch ein gespeichertes drittes geometrisches Element 54 sowie ein gespeichertes viertes geometrisches Element 56 auf der Benutzeroberfläche 46 angeordnet und wurden bspw. durch den Anwender, ähnlich zu dem zweiten geometrischen Element 50 jeweils im Voraus vor dem Anlegen des ersten geometrischen Elements 48 angelegt und in diesem Zuge gespeichert. Das dritte geometrische Element 54 weist eine dritte Geometrieinformation sowie einen vordefinierten zweiten Parameter auf, der bspw. durch den Anwender beim Anlegen definiert wurde. Das vierte geometrische Element 54 weist eine vierte Geometrieinformation sowie einen vordefinierten dritten Parameter auf, der bspw. durch den Anwender beim Anlegen definiert wurde.

Vorzugsweise wird während des Anlegens des ersten geometrischen Elements dessen erste Geometrieinformation auch mit der gespeicherten dritten Geometrieinformation und/oder der gespeicherten vierten Geometrieinformation verglichen werden. Vorliegend führt der Vergleich zwischen dem ersten und dem vierten geometrischen Element 48, 56 dazu, dass das vorbestimmte Ähnlichkeitskriterium nicht erfüllt ist, da es sich bei dem ersten geometrischen Element 48 um einen Kreis, bei dem vierten geometrischen Element 56 hingegen um eine Gerade handelt.

Das Ähnlichkeitskriterium definiert bspw., ob die erste und die zweite Geometrieinformation ähnlicher zueinander sind als die erste und die dritte Geometrieinformation. Vorliegend handelt es sich bei dem ersten bis dritten geometrischen Element jeweils um einen Kreis, sodass beispielsweise ein Ähnlichkeitsvergleich basierend auf einem Durchmesservergleich durchgeführt wird. Wenn die erste und die zweite Geometrieinformation ähnlicher als die erste und die dritte Geometrieinformation zueinander sind, wird wie vorliegend, der erste Zuordnungsvorschlag ausgegeben. Dies ist vorliegend der Fall, da der Durchmesservergleich von dem ersten und zweiten Kreis 48, 50 eine höhe Ähnlichkeit als der Durchmesservergleich von dem ersten und dritten Kreis 48, 54 liefert. Wäre hingegen die erste und die dritte Geometrieinformation ähnlicher zueinander als die erste und die zweite Geometrieinformation zueinander sind, kann vorzugsweise ein zweiter Zuordnungsvorschlag (nicht gezeigt) ausgegeben werden, den zweiten Parameter dem ersten geometrischen Element zuzuordnen.

Zusätzlich kann gemäß Fig. 3 zusätzlich zu dem ersten Zuordnungsvorschlag 52 ein erster Anpassungsvorschlag 58 ausgegeben werden (optionaler Schritte S140 in Fig. 4). Der erste Anpassungsvorschlag 58 wird ausgegeben, wenn der Vergleich der ersten Geometrieinformation mit der gespeicherten zweiten Geometrieinformation das vorbestimmte Ähnlichkeitskriterium erfüllt, und schlägt dem Anwender vor, zumindest einen Teil der ersten Geometrieinformation an die gespeicherte zweite Geometrieinformation anzupassen. Alternativ kann auch ein zweiter Anpassungsvorschlag ausgegeben werden, wenn ein optionaler Vergleich der ersten Geometrieinformation mit der dritten Geometrieinformation das vorbestimmte Ähnlichkeitskriterium erfüllt.

Der erste Anpassungsvorschlag 58 ist in Fig. 3 ähnlich zu dem ersten Zuordnungsvorschlag als Pop-Up-Fenster dargestellt, in dem der Anwender die Anfrage erhält, ob er die Geometrie des zweiten geometrischen Elements 50 für das erste geometrische Element übernehmen möchte. Diese Möglichkeit wird dem Anwender vorzugsweise zusätzlich zu dem Pop-Up-Fenster direkt an dem ersten geometrischen Element, z.B. durch eine gestrichelte Umrandung, die der Geometrie des zweiten geometrischen Elements entspricht, angezeigt. Die Anfrage kann der Anwender durch Klicken eines "OK"-Buttons annehmen, wodurch in dem optionalen Schritt S150 ein Anpassen der ersten Geometrieinformation basierend auf dem ersten Anpassungsvorschlag und Speichern der angepassten ersten Geometrieinformation als angepasstes erstes geometrisches Element 60 erfolgt. Die Anpassung erfolgt in Fig. 3 durch Angleichen des Durchmessers des Kreises 48 an den Durchmesser des Kreises 50, ohne dass die Position eines Kreismittelpunktes des Kreises 48 verändert wird.

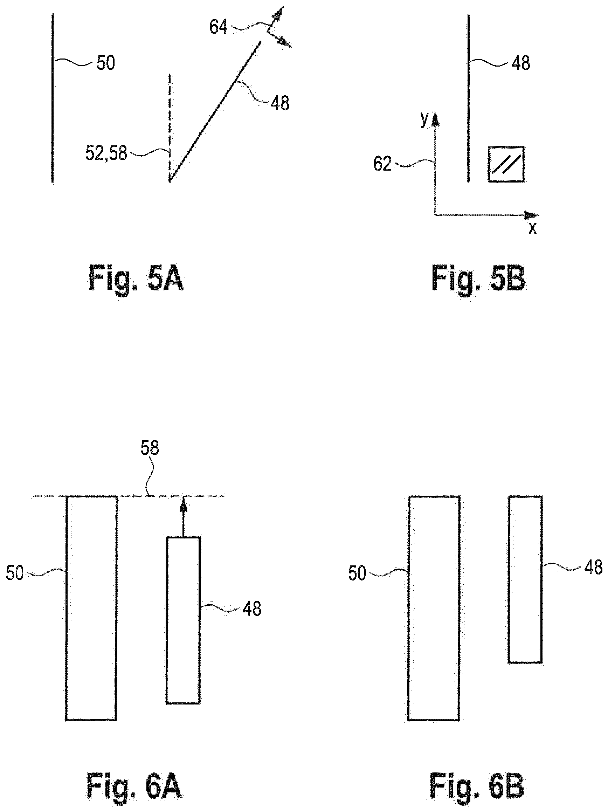

In Fig. 5A und 5B ist beispielhaft ein Anpassen einer Orientierung bzw. räumlichen Ausrichtung des ersten geometrischen Elements 48, z.B. basierend auf dem ersten Anpassungsvorschlag 58, dargestellt. Der Anwender erhält also zusätzlich zu dem Zuordnungsvorschlag, den zu dem zweite geometrische Element 50 gehörenden, ersten Parameter dem ersten geometrischen Element zuzuordnen, auch den ersten Anpassungsvorschlag.

Das erste geometrische Element 48 ist vorliegend genauso wie das zweite geometrische Element 50 eine erste Gerade. Die erste Gerade 48 ist in Fig. 5A nicht parallel zu der zweiten Geraden 50 ausgerichtet. Dies kann daraus resultieren, dass der Anwender beim Anlegen der ersten Geraden bspw. nicht genau gearbeitet hat. Der erste Anpassungsvorschlag 58 kann dem Anwender nun bspw. in Form einer gestrichelten Linie angezeigt werden. Zusätzlich kann durch die gestrichelte Linie der erste Zuordnungsvorschlag repräsentiert sein. Somit kann der Anwender bspw. durch einen Klick (oder Doppel-Klick) auf die gestrichelte Linie den ersten Anpassungsvorschlag und den ersten Zuordnungsvorschlag gemeinsam annehmen, so dass neben der vorgeschlagenen Geometrieübernahme auch der erste Parameter automatisch für das erste geometrische Element übernommen wird. Alternativ ist es auch möglich, dass der Anwender durch ein einfaches Klicken bspw. nur den ersten Zuordnungsvorschlag annehmen kann und erst durch ein doppeltes Klicken den ersten Zuordnungs- und Anpassungsvorschlag annimmt. Grundsätzlich kann der erste Zuordnungsvorschlag 52 auch als Pop-Up-Fenster und der erste Anpassungsvorschlag 58 als gestrichelte Linie angezeigt werden.

Bei Annahme des Anpassungsvorschlages 58, wird verfahrensseitig bzw. softwareseitig vorzugsweise mit der Anpassung begonnen. Hierzu wird begonnen, die erste Gerade 48 zu rotieren. Ein für die erste Gerade 48 gültiges Referenzkoordinatensystem 64 kann vorzugsweise für die Rotation gewählt werden. Als Ebene, in der die Rotation ausgeführt wird, wird vorzugsweise diejenige Ebene des Referenzkoordinatensystems 64 gewählt, deren Normalenrichtung einer aktuellen Blickrichtung (in die Blattebene hinein) am nächsten liegt (vorliegend also die X-Y-Ebene des Referenzkoordinatensystems 64). Sobald ein Winkel zwischen einer Normalenrichtung der ersten Geraden 48 und einer der Hauptachsen des Referenzkoordinatensystems 64 einen vorbestimmten Wert unterschreitet, wird eine neue Normalenrichtung der ersten Geraden 48 parallel zu dieser Hauptachse ausgerichtet. Die Normalenrichtung der ersten Geraden 48 verändert sich erst wieder, wenn der festgelegte Wert wieder überschritten wird. Für die Ausrichtung der ersten Geraden 48 parallel zu einer der drei Hauptachsen des Referenzkoordinatensystems 64 wird vorzugsweise nicht die Normalenrichtung selbst verwendet, sondern eine Richtung, in der die erste Gerade 48, bspw. durch einen Anwender, angelegt/definiert wurde. In diesem Fall ist die Normalenrichtung definitionsgemäß ebenfalls parallel zu einer anderen der drei Hauptachsen des Referenzkoordinatensystems 64. In manchen Fällen kann es vorteilhaft sein, die Definitionsrichtung der ersten Gerade 48 zur Beschreibung des Verfahrens heranzuziehen. Nach der Anpassung ist die erste Gerade 48 vorzugsweise parallel zu der Y-Achse des Koordinatensystems 62 ausgerichtet. Bei der Orientierung an einem Referenzsystem können die geometrischen Elemente vorzugsweise nicht nur parallel zu den Hauptachsen ausgerichtet werden. Zudem sind auch Zwischenschritte (bzw. Zwischenwinkel) möglich. Beim Einsatz von optischen Sensoren kann dieses Prinzip auch auf eine sog. Region of Interest (ROI), nicht nur die geometrischen Elemente angewandt werden.

In den Fig. 6A und 6B ist beispielhaft zusätzlich zu dem ersten Zuordnungsvorschlag 52 zur Parameterübernahme auch der erste Anpassungsvorschlag 58 zum Anpassen einer räumlichen Position des ersten geometrischen Elements 48 in Bezug auf einen Teil der zweiten Geometrieinformation des zweiten geometrischen Elements 50 dargestellt. Der erste Zuordnungs- und Anpassungsvorschlag 58 sind vorliegend als gestrichelte Linie dargestellt, durch die zusätzlich zur Parameterübernahmemöglichkeit eine Position anzeigt wird, an die das erste geometrische Element 48 angepasst werden soll. Werden der erste Zuordnungs- und Anpassungsvorschlag 58 akzeptiert, wird der erste Parameter für das erste geometrische Element 48 übernommen und die Position des ersten geometrischen Elements in die in Fig. 6B gezeigte Position verschoben bzw. angepasst (angedeutet durch einen Pfeil in Fig. 6A). Eine Änderung der Abmessungen des ersten geometrischen Elements 48 findet in den Figuren 6A und 6B nicht statt. Durch den Anpassungsvorschlag 58 kann in anderen Ausführungsbeispielen auch vorschlagen werden, sowohl die Ausrichtung bzw. Lage und die räumliche Position als auch die Größe des zweiten geometrischen Elements 50 für das erste geometrische Element 48 anzupassen.

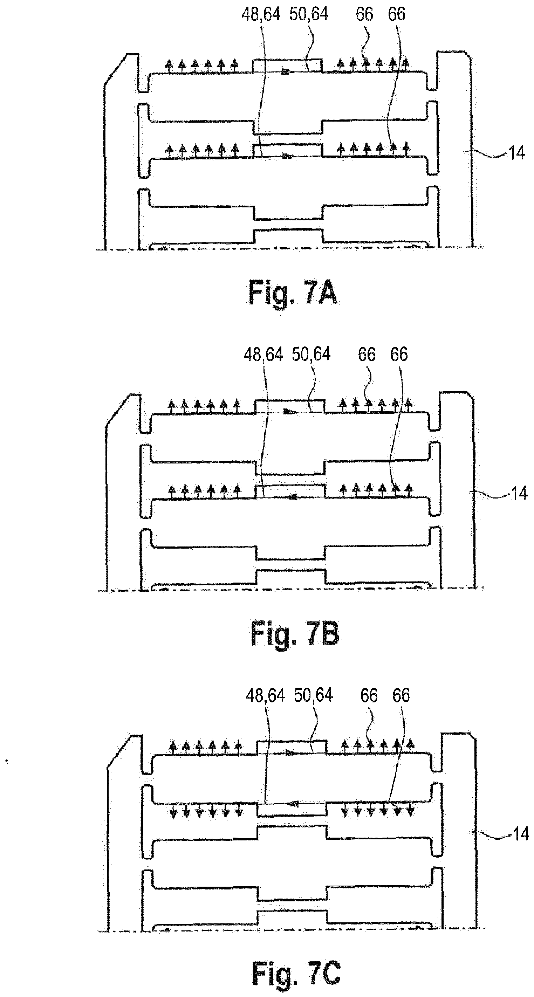

In den Figuren 7A, 7B und 7C ist jeweils ein beispielhaftes Messobjekt 14 dargestellt, wie es bspw. in der Messpfad-Planungssoftware CALYPSO in der zweidimensionalen Messraum-Szene gezeigt ist. Der Anwender hat im Voraus bereits das zweite geometrische Element 50, eine Gerade, definiert und zu dieser den ersten Parameter, d.h. Eigenschaften (z.B. eine Messrichtung, einen zu verwendenden Sensor und Messkopf, eine Messstrategie, einen Messgeschwindigkeit, eine Sicherheitsebene und/oder einen maximal zulässige Antastkraft) festgelegt. In Fig. 7A wurde dem zweiten geometrischen Element 50 eine Bewegungsrichtung 64 sowie eine Normalenrichtung 66 zu einzelnen Antastpunkte als erster Parameter zugewiesen. Das zweite geometrische Element wurde zudem gespeichert.

Darauffolgend definiert der Anwender nun das erste geometrische Element 48 vom selben Geometrietyp, d.h. als Gerade. Bereits während der Definition des ersten geometrischen Elements 48 werden bestimmte Eigenschaften, z.B. eine Länge und eine Orientierung bzw. Lage des ersten geometrischen Elements 48, mit allen bereits vorhandenen Geometrien desselben Typs verglichen. Die Definitionsrichtung, in welcher das Element definiert wird, wird in diesem Fall nicht miteinbezogen. Es ist also in diesem Fall unwichtig, ob der Anwender die Gerade per Mausklicks von links nach rechts oder von rechts nach links anlegt. Sobald die Eigenschaften des ersten geometrischen Elements 48 innerhalb einer bestimmten Toleranz (z.B. Winkel beider Geraden zueinander, Läger der Geraden) den Eigenschaften, bspw. des zweiten geometrischen Elements 50 gleichen, wird dem Anwender durch den ersten Zuordnungsvorschlag 52 vorgeschlagen, das erste geometrische Element 48 mit dem ersten Parameter anzulegen. Hierbei wird vorzugsweise zumindest ein ausgewählter Teil des zu dem zweiten geometrischen Element 50 definierten ersten Parameters übernommen.

Die Definitionsrichtung, in das das erste und/oder das zweite Element 48, 50 angelegt wird, kann auch miteinbezogen werden (siehe Fig. 7B), wobei während der Definition des ersten geometrischen Elements 48 weiterhin bestimmte Eigenschaften, z.B. Länge und Lage, mit allen bereits vorhandenen geometrischen Elementen verglichen werden. Sobald die Eigenschaften des ersten geometrischen Elements 48 innerhalb eines bestimmten Bereichs den Eigenschaften eines gespeicherten geometrischen Elements (z.B. dem zweiten geometrischen Element 50) gleichen, wird dem Anwender vorgeschlagen, das erste geometrische Element 48 mit demselben ersten Parameter anzulegen, wobei einzelne Parametereigenschaften, z.B. eine Richtung der Messstrategie, vorzugsweise basierend auf der Definitionsrichtung angepasst werden.

In Fig. 7C ist weiterhin dargestellt, dass es auch möglich ist, dass anhand der Definitionsrichtung der geometrischen Elemente alle als "sinnvoll" erscheinenden Eigenschaften gespiegelt oder gedreht werden, z.B. Normalenrichtung der Antastpunkte, die Auswahl des Taststifts, die Sicherheitsebene und/oder die Umfahrwege um Störkonturen. In Fig. 7C ist die Normalenrichtung 66 der Antastpunkte des ersten geometrischen Elements 48 bezüglich des zweiten geometrischen Elements 50 gespiegelt.

## Patentansprüche

1. Computerimplementiertes Verfahren zur Planung eines Messpfades eines Messgerätes (100) zur Vermessung eines Messobjektes (14), bei dem einem Anwender auf einer Benutzeroberfläche eine zweidimensionale oder dreidimensionale virtuelle Ansicht eines Messraumes, in dem das Messobjekt in Form einer zweidimensionalen oder dreidimensionalen technischen Zeichnung angezeigt wird, bereitgestellt wird, an dem der Anwender zum Erstellen des Messpfades mehrere geometrische Elemente als gewünschte Prüfmerkmale definieren kann, wobei das Verfahren folgende Schritte aufweist:
- Empfangen (S100) eines ersten Eingabebefehls zum Anlegen eines ersten Prüfmerkmals der gewünschten Prüfmerkmale, das eine dimensionelle Ist-Eigenschaft eines ersten geometrischen Elements (48) des Messobjektes (14) repräsentiert, zum Erstellen des Messpfades, wobei der Eingabebefehl eine erste Geometrieinformation des anzulegenden, ersten geometrischen Elements (48) aufweist und durch Anlegen des ersten geometrischen Elements (48) auf einer Benutzeroberfläche (46) durch den Anwender erzeugt wird;
- Vergleichen (S110) der ersten Geometrieinformation mit einer zweiten Geometrieinformation, die zu einem zweiten geometrischen Element (50), dem ein vordefinierter erster Parameter zugeordnet ist, gespeichert ist, wobei das erste und das zweite geometrische Element (48, 50) jeweils ein regelgeometrisches Element ist, das eine Gerade, ein Vieleck, einen Kreis, ein Oval, eine Ellipse, eine Ebene, eine Kugel, einen Zylinder, einen Kegel oder einen Torus aufweist, und wobei der vordefinierte erste Parameter einen verwendeten Sensor und/oder Taster, eine Messstrategie, eine Messgeschwindigkeit, eine Messrichtung, eine Sicherheitsebene, eine Antastkraft, eine Normalenrichtung eines Antastpunktes und/oder einen Umfahrweg definiert;
- Ausgeben (S120) eines ersten Zuordnungsvorschlags (52), den vordefinierten ersten Parameter dem ersten geometrischen Element (48) zuzuordnen, wenn bei dem Vergleich (S110) der ersten Geometrieinformation mit der zweiten Geometrieinformation ein vorbestimmtes Ähnlichkeitskriterium erfüllt ist; und
- Wiederholen der Schritte des Empfangens (S100), des Vergleichens (S110) und des Ausgebens (S120) für weitere der gewünschten Prüfmerkmale.

2. Computerimplementiertes Verfahren nach Anspruch 1, das ferner den Schritt aufweist:
- Zuordnen (S130) des vordefinierten ersten Parameters zu dem ersten geometrischen Element (48) bei einer Annahme des Zuordnungsvorschlags (52) seitens eines Anwenders.

3. Computerimplementiertes Verfahren nach Anspruch 1 oder 2, das ferner den Schritt aufweist:
- Ausgeben (S140) eines ersten Anpassungsvorschlags (58), zumindest einen Teil der ersten Geometrieinformation an die zweite Geometrieinformation anzupassen, wenn der Vergleich der ersten Geometrieinformation mit der zweiten Geometrieinformation das vorbestimmte Ähnlichkeitskriterium erfüllt.

4. Computerimplementiertes Verfahren nach Anspruch 3, das ferner die Schritte aufweist:
- Anpassen (S150) der ersten Geometrieinformation basierend auf dem ersten Anpassungsvorschlag und Speichern der angepassten ersten Geometrieinformation, wenn der erste Anpassungsvorschlag angenommen wird.

5. Computerimplementiertes Verfahren nach einem der Ansprüche 1 bis 4, wobei die erste und die zweite Geometrieinformation zumindest eine geometrische Abmessung, einen regelgeometrischen Geometrietyp und/oder eine räumliche Lage des ersten und des zweiten geometrischen Elements definieren.

6. Computerimplementiertes Verfahren nach einem der Ansprüche 1 bis 5, wobei das Ähnlichkeitskriterium definiert, dass ein Vergleich zwischen der ersten und der zweiten Geometrieinformation mindestens eine vordefinierte Ähnlichkeit aufweisen muss.

7. Computerimplementiertes Verfahren nach Anspruch 5 oder 6, wobei die vordefinierte Ähnlichkeit erfüllt ist, wenn das erste und das zweite geometrische Element (48, 50) einen gleichen regelgeometrischen Geometrietyp aufweisen, und wenn eine Abmessung und/oder räumliche Lage des ersten und des zweiten geometrischen Elements (48, 50) um einen vordefinierten Wert voneinander abweicht.

8. Computerimplementiertes Verfahren nach Anspruch 1, das ferner die Schritte aufweist:
- Vergleichen der ersten Geometrieinformation mit einer dritten Geometrieinformation, die zu einem dritten geometrischen Element (56), dem ein vordefinierter zweiter Parameter zugeordnet ist, gespeichert ist, und
- Ausgeben eines zweiten Zuordnungsvorschlags, den vordefinierten zweiten Parameter dem ersten geometrischen Element (48) zuzuordnen, wenn bei dem Vergleich der ersten Geometrieinformation mit der dritten Geometrieinformation das vorbestimmte Ähnlichkeitskriterium erfüllt ist.

9. Computerimplementiertes Verfahren nach Anspruch 8, wobei das Ähnlichkeitskriterium definiert, ob die erste und die zweite Geometrieinformation ähnlicher als die erste und die dritte Geometrieinformation zueinander sind.

10. Computerimplementiertes Verfahren nach Anspruch 9, das die Schritte aufweist:
- Ausgeben des ersten Zuordnungsvorschlags (52), wenn die erste und die zweite Geometrieinformation ähnlicher als die erste und die dritte Geometrieinformation zueinander sind, und
- Ausgeben des zweiten Zuordnungsvorschlags, wenn die erste und die dritte Geometrieinformation ähnlicher als die erste und die zweite Geometrieinformation zueinander sind.

11. Computerprogrammprodukt mit Programmcode, der dazu eingerichtet ist, ein computerimplementiertes Verfahren nach einem der Ansprüche 1 bis 10 auszuführen, wenn der Programmcode auf einem Computer (44) ausgeführt wird.

12. Messgerät (100) zur Vermessung eines Messobjektes (14), wobei einem Anwender auf einer Benutzeroberfläche eine zweidimensionale oder dreidimensionale virtuelle Ansicht eines Messraumes, in dem das Messobjekt in Form einer zweidimensionalen oder dreidimensionalen technischen Zeichnung angezeigt wird, bereitgestellt wird, an dem der Anwender zum Erstellen eines Messpfades des Messgerätes mehrere geometrische Elemente als gewünschte Prüfmerkmale definieren kann, wobei das Messgerät (100) einen Messsensor (36) und eine Auswerte- und Steuereinheit (42) aufweist, die dazu eingerichtet ist,;
einen ersten Eingabebefehl zum Anlegen eines ersten Prüfmerkmals der gewünschten Prüfmerkmale, das eine dimensionelle Ist-Eigenschaft eines ersten geometrischen Elements (48) des Messobjektes (14) repräsentiert, zum Erstellen des Messpfades zu empfangen, wobei der Eingabebefehl eine erste Geometrieinformation des anzulegenden, ersten geometrischen Elements (48) aufweist und durch Anlegen des ersten geometrischen Elements (48) auf einer Benutzeroberfläche (46) durch den Anwender erzeugt ist;
die erste Geometrieinformation mit einer zweiten Geometrieinformation, die zu einem zweiten geometrischen Element (50), dem ein vordefinierter erster Parameter zugeordnet ist, gespeichert ist, zu vergleichen, wobei das erste und das zweite geometrische Element (48, 50) jeweils ein regelgeometrisches Element ist, das eine Gerade, ein Vieleck, einen Kreis, ein Oval, eine Ellipse, eine Ebene, eine Kugel, einen Zylinder, einen Kegel oder einen Torus aufweist, und wobei der vordefinierte erste Parameter einen verwendeten Sensor und/oder Taster, eine Messstrategie, eine Messgeschwindigkeit, eine Messrichtung, eine Sicherheitsebene, eine Antastkraft, eine Normalenrichtung eines Antastpunktes und/oder einen Umfahrweg definiert; und
einen ersten Zuordnungsvorschlag, den vordefinierten ersten Parameter dem ersten geometrischen Element (48) zuzuordnen, auszugeben, wenn bei dem Vergleich der ersten Geometrieinformation mit der zweiten Geometrieinformation ein vorbestimmtes Ähnlichkeitskriterium erfüllt ist;
wobei die Auswerte- und Steuereinheit des Weiteren dazu eingerichtet ist, die Schritte des Empfangens, des Vergleichens und des Ausgebens für weitere der gewünschten Prüfmerkmale zu wiederholen.

## Claims

1. Computer-implemented method for planning a measurement path of a measurement device (100) for measuring a measurement object (14), in which a user is provided with a two-dimensional or three-dimensional virtual view of a measurement space, in which the measurement object is displayed in the form of a two-dimensional or three-dimensional technical drawing, on a user interface, on which the user can define a plurality of geometric elements as desired test features in order to create the measurement path, wherein the method has the following steps:
- receiving (S100) a first input command for creating a first test feature of the desired test features, which represents a dimensional actual property of a first geometric element (48) of the measurement object (14), for the purpose of creating the measurement path, wherein the input command has first geometry information relating to the first geometric element (48) to be created and is generated by the user by creating the first geometric element (48) on a user interface (46);
- comparing (S110) the first geometry information with second geometry information which is stored for a second geometric element (50), to which a predefined first parameter is assigned, wherein the first and second geometric elements (48, 50) are each a regular geometric element comprising a straight line, a polygon, a circle, an oval, an ellipse, a plane, a sphere, a cylinder, a cone or a torus, and wherein the predefined first parameter defines a used sensor and/or probe, a measurement strategy, a measurement speed, a measurement direction, a safety level, a probing force, a normal direction of a probing point and/or a bypass path;
- outputting (S120) a first assignment suggestion (52) to assign the predefined first parameter to the first geometric element (48) if a predetermined similarity criterion is met when comparing (S110) the first geometry information with the second geometry information; and
- repeating the receiving (S100), the comparing (S110) and the outputting (S120) steps for further ones of the desired test features.

2. Computer-implemented method according to Claim 1, which further comprises the step of:
- assigning (S130) the predefined first parameter to the first geometric element (48) when the assignment suggestion (52) is accepted by a user.

3. Computer-implemented method according to Claim 1 or 2, which further comprises the step of:
- outputting (S140) a first adaptation suggestion (58) to adapt at least a part of the first geometry information to the second geometry information if the comparison of the first geometry information with the second geometry information meets the predetermined similarity criterion.

4. Computer-implemented method according to Claim 3, which further comprises the steps of:
- adapting (S150) the first geometry information based on the first adaptation suggestion and storing the adapted first geometry information when the first adaptation suggestion is accepted.

5. Computer-implemented method according to one of Claims 1 to 4, wherein the first and the second geometry information defines at least one geometric dimension, a regular geometric geometry type and/or a spatial position of the first and the second geometric element.

6. Computer-implemented method according to one of Claims 1 to 5, wherein the similarity criterion defines that a comparison between the first and the second geometry information must have at least a predefined similarity.

7. Computer-implemented method according to Claim 5 or 6, wherein the predefined similarity is satisfied when the first and the second geometric element (48, 50) have the same regular geometric geometry type, and when a dimension and/or spatial position of the first and the second geometric element (48, 50) differs from each other by a predefined value.

8. Computer-implemented method according to Claim 1, which further comprises the steps of:
- comparing the first geometry information with third geometry information stored for a third geometric element (56), to which a predefined second parameter is assigned, and
- outputting a second assignment suggestion to assign the predefined second parameter to the first geometric element (48) if the predetermined similarity criterion is met when comparing the first geometry information with the third geometry information.

9. Computer-implemented method according to Claim 8, wherein the similarity criterion defines whether the first and the second geometry information is more similar to each other than the first and the third geometry information.

10. Computer-implemented method according to Claim 9, which comprises the steps of:
- outputting the first assignment suggestion (52) if the first and the second geometry information is more similar to each other than the first and the third geometry information, and
- outputting the second assignment suggestion if the first and the third geometry information is more similar to each other than the first and the second geometry information.

11. Computer program product comprising program code configured to carry out a computer-implemented method according to one of Claims 1 to 10 when the program code is executed on a computer (44).

12. Measurement device (100) for measuring a measurement object (14), wherein a user is provided with a two-dimensional or three-dimensional virtual view of a measurement space, in which the measurement object is displayed in the form of a two-dimensional or three-dimensional technical drawing, on a user interface, on which the user can define a plurality of geometric elements as desired test features in order to create a measurement path of the measurement device, wherein the measurement device (100) comprises a measurement sensor (36) and an evaluation and control unit (42) configured to receive a first input command for creating a first test feature of the desired test features, which represents a dimensional actual property of a first geometric element (48) of the measurement object (14), for the purpose of creating the measurement path, wherein the input command has first geometry information relating to the first geometric element (48) to be created and is generated by the user by creating the first geometric element (48) on a user interface (46);
to compare the first geometry information with second geometry information which is stored for a second geometric element (50), to which a predefined first parameter is assigned, wherein the first and second geometric elements (48, 50) are each a regular geometric element comprising a straight line, a polygon, a circle, an oval, an ellipse, a plane, a sphere, a cylinder, a cone or a torus, and wherein the predefined first parameter defines a used sensor and/or probe, a measurement strategy, a measurement speed, a measurement direction, a safety level, a probing force, a normal direction of a probing point and/or a bypass path; and
to output a first assignment suggestion to assign the predefined first parameter to the first geometric element (48) if a predetermined similarity criterion is met when comparing the first geometry information with the second geometry information;
wherein the evaluation and control unit is further configured to repeat the receiving, the comparing and the outputting steps for further ones of the desired test features.

## Revendications

1. Procédé mis en œuvre par ordinateur pour planifier un trajet de mesure d'un appareil de mesure (100) destiné à mesurer un objet de mesure (14), dans lequel une vue virtuelle en deux dimensions ou trois dimensions d'un espace de mesure, dans lequel l'objet de mesure est représenté sous la forme d'un dessin technique en deux dimensions ou trois dimensions, est fournie à un utilisateur sur une surface utilisateur, sur laquelle l'utilisateur peut définir plusieurs éléments géométriques comme caractéristiques de contrôle souhaitées afin de créer le trajet de mesure, le procédé comprenant les étapes suivantes :
- réception (S100) d'une première instruction d'entrée pour créer une première caractéristique de contrôle parmi les caractéristiques de contrôle souhaitées, qui représente une propriété dimensionnelle réelle d'un premier élément géométrique (48) de l'objet de mesure (14), pour créer le chemin de mesure, l'instruction d'entrée comportant une première information géométrique du premier élément géométrique (48) à créer et étant générée par l'utilisateur en créant le premier élément géométrique (48) sur une surface utilisateur (46) ;
- comparaison (S110) de la première information géométrique avec une deuxième information géométrique mémorisée pour un deuxième élément géométrique (50) auquel est affecté un premier paramètre prédéfini, le premier et le deuxième élément géométrique (48, 50) étant chacun un élément géométrique régulier qui comprend une droite, un polygone, un cercle, un ovale, une ellipse, un plan, une sphère, un cylindre, un cône ou un tore, et le premier paramètre prédéfini définissant un capteur et/ou une sonde utilisés, une stratégie de mesure, une vitesse de mesure, une direction de mesure, un plan de sécurité, une force de sondage, une direction normale d'un point de sondage et/ou une trajectoire de détour ;
- production (S120) d'une première proposition d'affectation (52) pour affecter le premier paramètre prédéfini au premier élément géométrique (48) si un critère de similarité prédéterminé est satisfait lors de la comparaison (S110) de la première information géométrique avec la deuxième information géométrique ; et
- répétition des étapes de réception (S100), de comparaison (S110) et de production (S120) pour d'autres caractéristiques de contrôle souhaitées.

2. Procédé mis en œuvre par ordinateur selon la revendication 1, comprenant en outre l'étape :
- affectation (S130) du premier paramètre prédéfini au premier élément géométrique (48) lors d'une supposition de la proposition d'affectation (52) par un utilisateur.

3. Procédé mis en œuvre par ordinateur selon la revendication 1 ou 2, comprenant en outre l'étape :
- production (S140) d'une première proposition d'adaptation (58) pour adapter au moins une partie de la première information géométrique à la deuxième information géométrique si la comparaison de la première information géométrique avec la deuxième information géométrique satisfait au critère de similarité prédéterminé.

4. Procédé mis en œuvre par ordinateur selon la revendication 3, comprenant en outre les étapes :
- ajustement (S150) de la première information géométrique sur la base de la première proposition d'adaptation et mémorisation de la première information géométrique ajustée lorsque la première proposition d'adaptation est supposée.

5. Procédé mis en œuvre par ordinateur selon l'une quelconque des revendications 1 à 4, dans lequel les première et deuxième informations géométriques définissent au moins une dimension géométrique, un type de géométrie géométrique régulière et/ou une position spatiale des premier et deuxième éléments géométriques.

6. Procédé mis en œuvre par ordinateur selon l'une quelconque des revendications 1 à 5, dans lequel le critère de similarité définit qu'une comparaison entre la première et la deuxième information géométrique doit avoir au moins une similarité prédéfinie.

7. Procédé mis en œuvre par ordinateur selon la revendication 5 ou 6, dans lequel la similarité prédéfinie est satisfaite si les premier et deuxième éléments géométriques (48, 50) ont un type de géométrie géométrique identique, et si une dimension et/ou une position spatiale des premier et deuxième éléments géométriques (48, 50) diffèrent l'un de l'autre d'une valeur prédéfinie.

8. Procédé mis en œuvre par ordinateur selon la revendication 1, comprenant en outre les étapes :
- comparaison de la première information géométrique avec une troisième information géométrique qui est stockée pour un troisième élément géométrique (56) auquel un deuxième paramètre prédéfini est affecté, et
- production d'une deuxième proposition d'affectation pour affecter le deuxième paramètre prédéfini au premier élément géométrique (48) si le critère de similarité prédéfini est satisfait lors de la comparaison de la première information géométrique avec la troisième information géométrique.

9. Procédé mis en œuvre par ordinateur selon la revendication 8, dans lequel le critère de similarité définit si les première et deuxième informations géométriques sont plus similaires l'une à l'autre que les première et troisième informations géométriques.

10. Procédé mis en œuvre par ordinateur selon la revendication 9, comprenant les étapes :
- production de la première proposition d'affectation (52) si les première et deuxième informations géométriques sont plus similaires l'une à l'autre que les première et troisième informations géométriques, et
- production de la deuxième proposition d'affectation si les première et troisième informations géométriques sont plus similaires l'une à l'autre que les première et deuxième informations géométriques.

11. Produit de programme informatique avec code de programme, qui est configuré pour exécuter un procédé mis en œuvre par ordinateur selon l'une quelconque des revendications 1 à 10 lorsque le code de programme est exécuté sur un ordinateur (44).

12. Appareil de mesure (100) pour mesurer un objet de mesure (14), dans lequel une vue virtuelle en deux dimensions ou trois dimensions d'un espace de mesure, dans lequel l'objet de mesure est représenté sous la forme d'un dessin technique en deux dimensions ou trois dimensions, est fournie à un utilisateur sur une surface utilisateur, sur laquelle l'utilisateur peut définir plusieurs éléments géométriques comme caractéristiques de contrôle souhaitées afin de créer un chemin de mesure de l'appareil de mesure, l'appareil de mesure (100) comportant un capteur de mesure (36) et une unité d'évaluation et de commande (42) qui est adaptée pour ;
recevoir une première instruction d'entrée pour créer une première caractéristique de contrôle parmi les caractéristiques de contrôle souhaitées, qui représente une propriété dimensionnelle réelle d'un premier élément géométrique (48) de l'objet de mesure (14), pour créer le chemin de mesure, l'instruction d'entrée comportant une première information géométrique du premier élément géométrique (48) à créer et étant générée par l'utilisateur en créant le premier élément géométrique (48) sur une surface utilisateur (46) ; comparer la première information géométrique avec une deuxième information géométrique mémorisée pour un deuxième élément géométrique (50) auquel est affecté un premier paramètre prédéfini, le premier et le deuxième élément géométrique (48, 50) étant chacun un élément géométrique régulier qui comprend une droite, un polygone, un cercle, un ovale, une ellipse, un plan, une sphère, un cylindre, un cône ou un tore, et le premier paramètre prédéfini définissant un capteur et/ou une sonde utilisés, une stratégie de mesure, une vitesse de mesure, une direction de mesure, un plan de sécurité, une force de sondage, une direction normale d'un point de sondage et/ou une trajectoire de détour ; et
produire une première proposition d'affectation pour affecter le premier paramètre prédéfini au premier élément géométrique (48) si un critère de similarité prédéfini est satisfait lors de la comparaison de la première information géométrique avec la deuxième information géométrique ;
l'unité d'évaluation et de commande étant en outre adaptée pour répéter les étapes de réception, de comparaison et de production pour d'autres caractéristiques de contrôle souhaitées.
